(19) **Europäisches Patentamt**

**European Patent Office**

**Office européen des brevets**

(11) Veröffentlichungsnummer: **0 307 056 B1**

(12) **EUROPÄISCHE PATENTSCHRIFT**

(45) Veröffentlichungstag der Patentschrift: **22.01.92**

(21) Anmeldenummer: **88201940.9**

(22) Anmeldetag: **07.09.88**

(51) Int. Cl.5: **A01J 25/00**, A01J 25/11

(54) Vorrichtung zur Herstellung von Käsemasse für Weichkäse.

(30) Priorität: **11.09.87 DE 3730632**

(43) Veröffentlichungstag der Anmeldung:
**15.03.89 Patentblatt 89/11**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI NL SE**

(56) Entgegenhaltungen:
**DE-A- 2 213 306**
**NL-A- 8 502 474**
**US-A- 3 130 744**

(73) Patentinhaber: **UNILEVER NV**
**Burgemeester s'Jacobplein 1 P.O. Box 760**
**NL-3000 DK Rotterdam(NL)**

(84) Benannte Vertragsstaaten:
**BE CH DE ES FR GR IT LI NL SE AT**

Patentinhaber: **UNILEVER PLC**
**Unilever House Blackfriars P.O. Box 68**
**London EC4P 4BO(GB)**

(84) Benannte Vertragsstaaten:
**GB**

(72) Erfinder: **Krause, Friederich**
**Hebelinger Strasse 14**
**W-8968 Durach b. Kempten (Allgäu)(DE)**
Erfinder: **Lehmbecker, Wolfgang**
**Nachtigallenweg 55**
**W-8060 Kempten (Allgäu)(DE)**
Erfinder: **Sonnenmoser, Hubert**
**Hieberstrasse 18**
**W-8960 Kempten (Allgäu)(DE)**

(74) Vertreter: **Mulder, Cornelis Willem Reinier, Dr. et al**
**UNILEVER N.V. Patent Division P.O. Box 137**
**NL-3130 AC Vlaardingen(NL)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 307 056 B1

## Beschreibung

Die Erfindung betrifft eine Vorrichtung zur Herstellung von Käsemasse für Weichkäse, die eine Vorrichtung zur Herstellung eines Bruch-Molke-Gemisches mit mehreren Behältern, eine Vorrichtung zum Ausgießen dieses Gemisches in eine Auslaufrinne, eine Entmolkungseinrichtung und eine Ausformeinrichtung aufweist.

Eine bekannte, in der DE-PS 22.13.306 beschriebene Anlage dieser Art weist eine einzige Entmolkungseinrichtung auf, die bei einer einzigen Ausformeinrichtung endet. Bei einer längeren Betriebsdauer oder bei einer Umstellung auf eine andere Bakterien-Kultur soll die ganze Anlage stillgelegt und gereinigt werden.

Der Erfindung liegt die Aufgabe zugrunde, die Vorrichtung der eingangs beschriebenen Art derart weiterzubilden, daß mit dieser kontinuierlich hochwertiger Weichkäse hergestellt werden kann und zudem eine Umstellung auf eine andere Bakterien-Kultur ohne Betriebsunterbrechung möglich ist.

Diese Aufgabe wird erfindungsgemäß dadurch gelöst, daß mehrere Entmolkunseinrichtungen und eine entsprechende Anzahl Ausformeinrichtungen vorgesehen sind und daß die Ausgiessvorrichtung wahlweise mit einer der Entmolkungseinrichtungen verbindbar ist.

Durch diese Maßnahme kann auf Wunsch das produzierte Bruch-Molke-Gemisch einer vorab gereinigten Entmolkungseinrichtung und Ausformeinrichtung zugeleitet werden, damit eine Anreicherung der Kontamination und/oder Vermischung verschiedener Bakterienkulturen möglichst verhindert werden.

Weil die außer Betrieb gestellte Entmolkungseinrichtung und Ausformeinrichtung möglichst bald zu reinigen sind, sind diese beiden Einrichtungen entsprechend einer bevorzugten Ausführungsform mit einer von den anderen Entmolkungs- und Ausformeinrichtungen unabhängigen Reinigungseinrichtung versehen. Damit zudem die laufende Produktion nicht mit Reinigungsflüssigkeit kontaminiert wird, ist es empfehlenswert, jede Entmolkungseinrichtung und die dazugehörige Ausformeinrichtung mit einer gesonderten, diese beiden Einrichtungen umgebenden Haube zu versehen.

Ein Ausführungsbeispiel der erfindungsgemäßen Vorrichtung wird anhand der Zeichnung näher beschrieben.

Es zeigt:

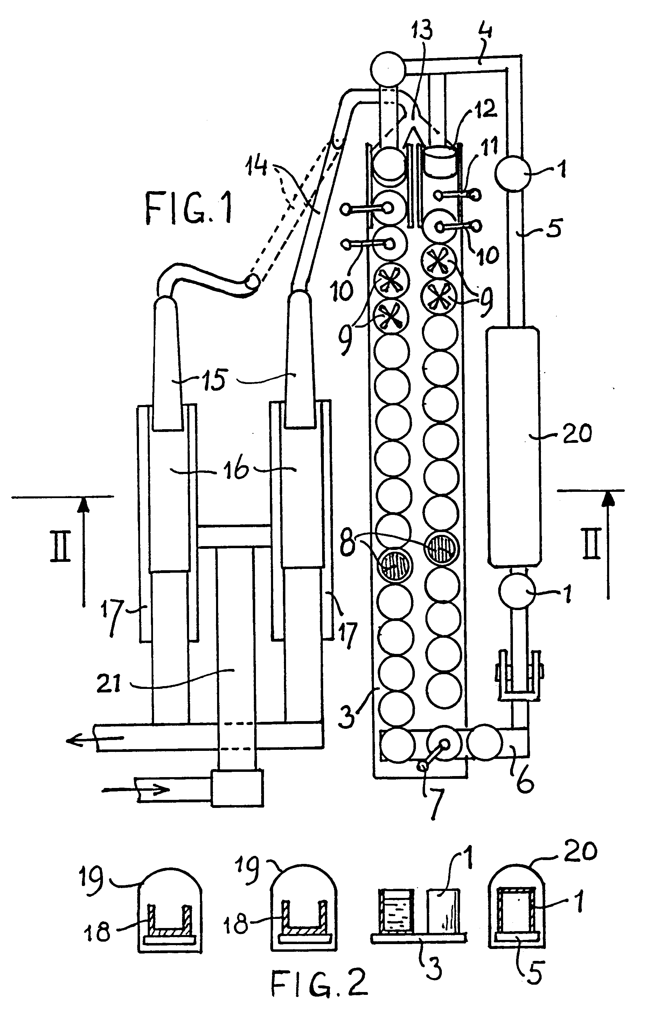

Fig. 1 eine Draufsicht auf die gesamte Anlage, und

Fig. 2 einen Querschnitt längs der Linie II-II in Fig. 1.

Die Vorrichtung ist mit einer Mehrzahl von Behältern 1 versehen, die voneinander unabhängig auf einer geschlossenen Transportbahn 3 bis 6 geführt werden. Diese Bahn umfaßt zwei parallele, gerade Strecken 3, 5, die durch zwei Querverbindungsstrecken 4, 6 miteinander verbunden sind.

Entlang der einen geraden Strecke 3 sind hintereinander die diversen Milch- und Bruchbehandlungsstationen 7 bis 12 angeordnet.

Bei den Behandlungsstationen sind die respektiven Behandlungsvorrichtungen wie Schneide- und Rühr-vorrichtungen 8, 9 zusammen mit den Behältern fahrbar. Am Ende der Behandlungsstrecke 3 der Transportbahn werden Molke und Käsebruch in einer Ausgiesvorrichtung 12 in eine Auslaufrinne 13 gegossen, durch die dieses Gemisch in einem Führungskanal 14, eine Rühreinrichtung 15 und von dort auf ein Filterband und eine Entmolkungseinrichtung 16 gelangt, wo Molke und Bruch getrennt werden. Dieser Bruch oder Käsemasse wird in einer Ausformeinrichtung 17 in bereitgestellte Formen 18 eingefüllt und auf herkömmliche Weise weiterbehandelt.

Die entleerten Behälter 1 werden über die Querverbindungsstrecke 4 zur geraden Rückkehrstrecke 5 geführt und dort in einer Reinigungsstation 20 sorgfältig gereinigt. Darauf werden die gereinigten Behälter über die Querverbindungsstrecke 6 zur Einfüllstation 7 geführt.

Die Entmolkungseinrichtung 16 und die dazugehörige Ausformeinrichtung 17 sind doppelt ausgeführt. Durch Umstellung des Führungskanals 14 wird das Bruch-Molke-Gemisch nach Wahl entweder dem einen oder dem anderen Satz Einrichtungen zugeleitet. Wenn der eine Satz in Betrieb ist, kann der andere mittels einer dazugehörigen, von den anderen Entmolkungs- und Ausformeinrichtungen unabhängigen Reinigungseinrichtung gereinigt werden. Durch abermaliges Umstellen des Führungskanals 14, wie angedeutet, kann der gereinigte Satz wieder verwendet werden und der andere außer Betrieb gestellt und zur Reinigung bereitgestellt werden. Damit während des Reinigens keine Kontamination des Käseproduktes mit Reinigungsflüssigkeit auftreten kann, ist vorzugsweise jede Reinigungseinrichtung mit einer die ganze Entmolkungseinrichtung 16 und die Ausformvorrichtung 17 umgebenden Haube 19 versehen. Die auf herkömmliche Weise vorbehandelten Ausformwerkzeuge werden über einer Zuführvorrichtung 21 der sich zur Zeit in Betrieb befindlichen Ausformeinrichtung 17 zugeleitet. Zu diesem Zweck sind sämtliche Ausformeinrichtungen 17 wahlweise mit einer und derselben Zuführvorrichtung 21 für Ausformwerkzeuge verbindbar.

## Patentansprüche

1. Vorrichtung zur Herstellung von Käsemasse für vorzugsweise Weichkäse, die eine Vorrichtung zur Herstellung eines Bruch-Molke-Gemisches mit mehreren Behältern, eine Vorrichtung zum Ausgießen dieses Gemisches in einer Auslaufrinne, eine Entmolkungseinrichtung und eine Ausformeinrichtung aufweist, dadurch gekennzeichnet, daß mehrere Entmolkungseinrichtungen (16) und eine entsprechende Anzahl Ausformeinrichtungen (17) vorgesehen sind und daß die Ausgiessvorrichtung (12) wahlweise mit einer der Entmolkungseinrichtungen (16) verbindbar ist.

2. Vorrichtung nach Anspruch 1, dadurch gekennzeichnet, daß jede Entmolkungseinrichtung (16) und dazugehörige Ausformeinrichtung (17) mit einer von den anderen Entmolkungs- und Ausformeinrichtungen unabhängigen Reinigungseinrichtung versehen ist.

3. Vorrichtung nach Ansprüche 1 und 2, dadurch gekennzeichnet, daß jede Reinigungseinrichtung mit einer die ganze Entmolkungseinrichtung (16) und Ausformeinrichtung (17) umgebenden Haube (19) versehen ist.

4. Vorrichtung nach einem der Ansprüche 1 bis 3, dadurch gekennzeichnet, daß sämtliche Ausformeinrichtungen (17) wahlweise mit einer und derselben Zuführvorrichtung (21) für Ausformwerkzeuge verbindbar ist.

5. Vorrichtung nach einem der Ansprüche 1 bis 4, dadurch gekennzeichnet, dass die Auslaufrinne (13) durch einem umstellbaren Führungskanal (14) wahlweise mit einer der Entmolkungseinrichtungen (16) verbindbar ist.

## Claims

1. Apparatus for preparing cheese mass for preferably soft cheese, comprising an apparatus for preparing a curd-whey-mixture having several containers, an apparatus for pouring this mixture out into an emptying channel, a de-wheying apparatus and a moulding apparatus characterised in that a plurality of de-wheying apparatuses (16) and a corresponding number of moulding apparatuses (17) are provided and that the apparatus for pouring out (12) at choice may be connected with any of the de-wheying apparatuses (16).

2. Apparatus according to Claim 1, characterised in that each de-wheying apparatus (16) and moulding apparatus (17) belonging to it is provided with a cleaning apparatus which is independent from any of the other de-wheying and moulding apparatuses.

3. Apparatus according to Claims 1 and 2, characterised in that each cleaning apparatus is provided with a hood (19) enveloping the entire de-wheying apparatus (16) and moulding apparatus (17).

4. Apparatus according to one of the Claims 1 to 3, characterised in that all moulding apparatuses (17) at choice may be connected with one and the same feeding device (21) for moulding tools

5. Apparatus according to any one of Claims 1 to 4, characterised in that the emptying channel (13) may be connected at choice with one of the de-wheying apparatuses (16) by means of a switch-over guiding channel (14).

## Revendications

1. Installation pour la fabrication de caillé pour des fromages de préférence à pâte molle, qui présente une installation pour préparer un mélange caillé-petit-lait avec plusieurs récipients, une installation pour verser ce mélange dans une rigole d'écoulement, un dispositif pour retirer le petit-lait et une installation de mise en forme, caractérisée en ce que plusieurs installations d'enlèvement du petit-lait (16) et un nombre correspondant d'installations de mise en forme (17) sont prévues, et en ce que le dispositif de versement (12) peut être lié au choix avec l'une des installations d'enlèvement du petit-lait (16).

2. Installation selon la revendication 1, caractérisée en ce que chaque installation d'enlèvement du petit-lait (16) et installation de mise en forme (17) qui en relève est munie d'une installation de nettoyage indépendante des autres installations d'enlèvement du petit-lait et de mise en forme.

3. Installation selon les revendications 1 et 2, caractérisée en ce que chaque installation de nettoyage est munie d'un capot (19) entourant la totalité de l'installation d'enlèvement du petit-lait (16) et de l'installation de mise en forme (17).

4. Installation selon l'une des revendications 1 à 3, caractérisée en ce que l'ensemble des installations de mise en forme (17) peut être lié au choix avec un seul dispositif d'amenée (21) pour appareils de mise en forme.

5. Installation selon l'une des revendications 1 à 4, caractérisée en ce que la rigole d'écoulement (13) peut être liée par l'intermédiaire d'un canal d'amenée (14) au choix avec l'une des installations d'enlèvement du petit-lait (16).

FIG.1

FIG.2